# FASCICULE DE BREVET EUROPEEN

(11) **EP 0 911 214 B1**
(45) Date de publication et mention de la délivrance du brevet: **18.06.2003**
(21) Numéro de dépôt: 98119795.7
(22) Date de dépôt: 23.10.1998
(51) Int. Cl.: B60Q 1/076

(54) **Projecteur comportant un correcteur d'orientation notamment pour véhicule automobile**
Scheinwerfer mit Neigungssteuerung für Kraftfahrzeuge
Headlight with aiming control for automotive vehicle

(30) Priorité: 24.10.1997 FR 9713611
(43) Date de publication de la demande: 28.04.1999
(73) Titulaire: VALEO VISION, 93000 Bobigny (FR)
(72) Inventeur: Gonzalez Gallegos, Fermin, 23600 Martos (Jaen) (ES)
(74) Mandataire: Lemaire, Marc

(56) Documents cités:
- DE-A- 19 522 856
- GB-A- 2 109 082

## Description

La présente invention se rapporte à un projecteur comportant un correcteur d'orientation et à un correcteur d'orientation pour projecteur, notamment pour véhicule automobile.

Il est classique d'équiper un projecteur d'un correcteur qui permet de modifier l'orientation du faisceau généré par le projecteur. Un tel correcteur comprend un mécanisme motoréducteur qui entraîne une tige de sortie en translation. La tige est liée à une partie optiquement active du projecteur dont la position sera modifiée lors de la translation de la tige.

Dans les projecteurs à boîtier dans lesquels un boîtier est fermé à l'avant par une glace transparente et reçoit un réflecteur qui porte une lampe, la tige de sortie du correcteur est liée au réflecteur. Le mouvement de translation de la tige entraîne le réflecteur en rotation autour d'un axe perpendiculaire à la tige.

À l'heure actuelle, on sait implanter le correcteur dans les projecteurs à boîtier selon deux techniques différentes.

Selon une première technique, présentée par exemple dans le brevet DE 195 14 994, le correcteur est monté à l'intérieur du boîtier. Si on souhaite rendre démontable le correcteur monté selon une telle conception, il est nécessaire de prévoir une ouverture importante dans la paroi arrière du boîtier ; cette ouverture devra être fermée par un capot amovible. L'utilisation d'un capot de taille importante est très difficile à mettre en oeuvre en pratique, notamment à cause de problèmes d'étanchéité.

Selon une seconde technique, décrite par exemple dans la demande de brevet EP 0 557 697, montrant un dispositif suivant le préambule des revendications 1 et 9, le correcteur est monté sur le boîtier, à l'extérieur de celui-ci. Seule une avancée du correcteur, généralement dénommée nez du correcteur, pénètre à l'intérieur du boîtier du correcteur. La tige est située à l'extrémité du nez du correcteur. Ce montage du correcteur permet un démontage facile, éventuellement pour le remplacement du correcteur.

Cette conception présente toutefois des inconvénients. Tout d'abord, le correcteur doit posséder pour son alimentation électrique un connecteur spécifique, ce qui augmente son coût et complique les opérations de branchement du projecteur au circuit électrique du véhicule. De plus, le correcteur étant monté à l'extérieur du boîtier de projecteur, il doit non seulement être fixé de manière étanche au boîtier, mais aussi être parfaitement étanche lui-même, ce qui augmente son coût. Enfin, le correcteur n'étant fixé au boîtier de projecteur que par son nez, il est particulièrement sensible aux vibrations, ce qui se ressent sur sa fiabilité de fonctionnement.

L'invention vise à proposer un projecteur dans lequel le correcteur est monté selon une technique nouvelle qui remédie aux inconvénients précités, notamment qui permette le démontage facile du correcteur et qui assure une bonne étanchéité au boîtier du projecteur, et ce à coût réduit.

Pour ce faire, la présente invention propose un projecteur, notamment pour véhicule automobile, qui comporte un boîtier fermé par une glace, un réflecteur portant une lampe et reçu dans le boîtier, ainsi qu'un correcteur présentant une tige de sortie liée au réflecteur, le correcteur possédant une partie qui ferme à étanchéité une ouverture d'une paroi du boîtier, caractérisé en ce que ladite partie est une partie d'extrémité du correcteur opposée à la tige de sortie et en ce que le correcteur s'étend entre ladite partie d'extrémité et la tige de sortie.

Le correcteur est ainsi essentiellement situé dans le boîtier ; toutefois l'encombrement nécessité par le correcteur dans le boîtier est réduit au minimum.

Avantageusement, le correcteur est alimenté électriquement par un faisceau de câbles intérieur au boîtier. On peut aussi prévoir que le faisceau de câbles et des câbles d'alimentation de la lampe soient réunis en un faisceau unique.

De façon préférée, ledit faisceau unique traverse le boîtier au moyen d'un connecteur étanche unique qui réalise la connexion de la lampe et du correcteur à l'alimentation du véhicule.

Selon d'autres aspects intéressants de l'invention :
- ladite partie d'extrémité présente une collerette située à l'extérieur du boîtier ;
- un joint est monté comprimé entre la collerette et la paroi du boîtier ;
- ladite partie d'extrémité comporte une partie saillante de forme complémentaire à un outil de préhension ; et
- le correcteur présente des pions saillants qui réalisent une fixation du correcteur du type baïonnette.

La présente invention propose également un correcteur pour projecteur à boîtier, notamment pour véhicule automobile, comportant un mécanisme motoréducteur et présentant une tige de sortie, caractérisé en ce qu'il possède une partie d'extrémité opposée à la tige de sortie comportant des moyens pour sa fixation étanche dans une ouverture d'une paroi du boîtier.

Avantageusement ladite partie d'extrémité comporte une collerette.

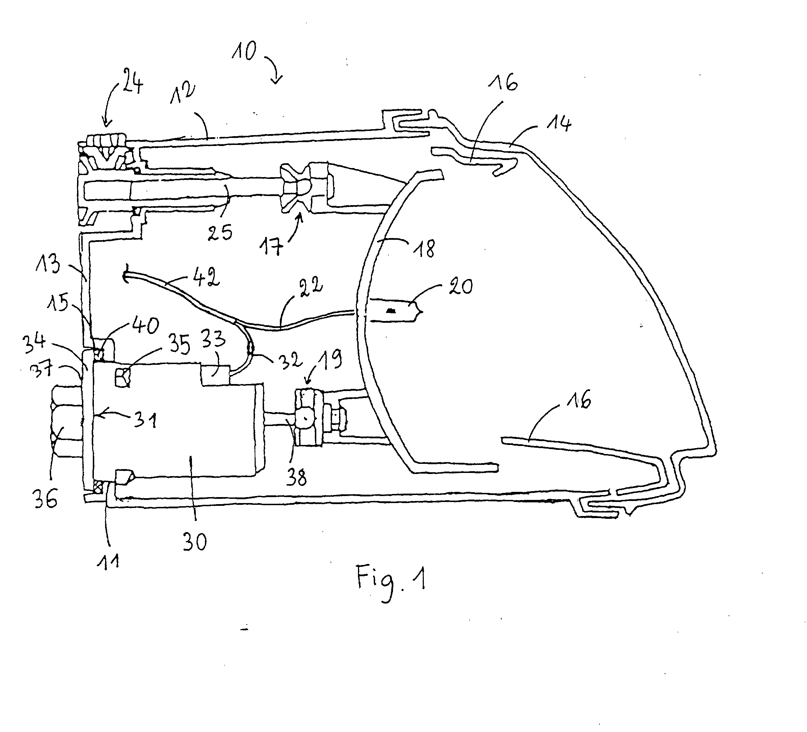

Un exemple de réalisation de l'invention va à présent être décrit en référence au dessin annexé sur lequel la figure 1 représente un projecteur selon l'invention.

Le projecteur 10 comporte un boîtier 12 fermé à l'avant par une glace 14. Un réflecteur 18 est, placé à l'intérieur du boîtier et porte une lampe 20. La lampe 20 est alimenté en électricité par des câbles 22.

Un masque 16 est également prévu au voisinage de la glace 14 afin d'améliorer l'esthétique du projecteur.

Le réflecteur 18 est monté dans le boîtier 12 en trois points : un point fixe (non représenté) ainsi qu'un premier point mobile 17 et un second point mobile 19.

Le projecteur 10 comporte un système de réglage manuel 24 qui entraîne en translation une tige de commande 25 liée au réflecteur 18 au niveau du premier point mobile 17.

Le projecteur 10 comporte également un correcteur 30 situé pour l'essentiel dans le boîtier 12 qui entraîne en translation une tige de sortie 38 liée au réflecteur 18 au niveau du second point mobile 19.

La fixation du réflecteur 18 au niveau des points mobiles de montage 17, 19 est réalisée par des moyens connus utilisant une rotule à l'extrémité des tiges 25, 38 et des sièges de rotule correspondants liés au réflecteur 18.

Le correcteur 30 a une forme globalement cylindrique à axe parallèle à la tige de sortie 38. Dans sa partie d'extrémité 31 opposée à la tige 38, le correcteur 30 présente une collerette 34 sur tout son pourtour.

La paroi arrière 13 du boîtier 12 (c'est-à-dire la paroi qui fait face à la glace 14) possède un renfoncement 15 qui présente une ouverture 11. Le correcteur 30 est fixé sur le boîtier 12 par ladite partie d'extrémité au niveau de l'ouverture 11 au moyen de pions 35 saillants du correcteur 30 qui permettent une fixation du type baïonnette.

En position montée, la collerette 34 est située à l'extérieur du boîtier 12, au niveau du renfoncement 15. Un joint d'étanchéité 40 est monté comprimé entre la collerette 34 et la paroi arrière 13 au niveau du renfoncement 15.

Le correcteur 30 (ou plus précisément ladite partie d'extrémité 31) ferme ainsi à étanchéité l'ouverture 11 de la paroi arrière 13. De façon avantageuse, la paroi extérieure de la collerette 34 s'étend alors dans le prolongement de la paroi arrière 13 considérée ici en dehors de son renfoncement 15.

En position montée, le correcteur 30 s'étend entre la tige de sortie 38 et ladite partie d'extrémité 31 réalisant l'étanchéité. On comprend qu'ainsi l'encombrement nécessité par le correcteur 30 dans le boîtier 12 du projecteur 10 est réduit au minimum et que la tenue mécanique du correcteur 30 est bonne.

Ladite partie d'extrémité 31 du correcteur 30 présente une paroi extérieure 37 qui comporte de façon avantageuse une partie saillante 36 de forme complémentaire à un outil de préhension, ici de forme hexagonale. Le correcteur 30 pourra ainsi facilement être monté ou démonté dans le boîtier 12 par la fixation de type baïonnette et l'utilisation de l'outil adapté.

Le correcteur 30 est alimenté en électricité par un faisceau de câbles 32 intérieur au boîtier 12. Le faisceau de câbles 32 est par exemple branché sur le correcteur 30 par l'intermédiaire d'un connecteur de correcteur 33 qui, étant situé à l'intérieur du boîtier 12 du projecteur 10, n'est pas nécessairement étanche.

De façon avantageuse, le faisceau de câbles 32 et les câbles 22 d'alimentation de la lampe 20 sont réunis en un faisceau unique 42 qui se terminera au niveau d'un connecteur étanche unique (non représenté) au niveau du passage du boîtier. La connexion de la lampe 20 et du correcteur 30 à l'alimentation du véhicule sera donc réalisée par ce connecteur étanche unique. En plus de la réduction du coût du projecteur (un seul connecteur étanche), on simplifie ainsi son montage sur le véhicule (une seule opération de connexion).

## Revendications

1. Projecteur (10) pour véhicule automobile, qui comporte un boîtier (12) fermé par une glace (14), un réflecteur (18) portant une lampe (20) et reçu dans le boîtier (12), ainsi qu'un correcteur (30) présentant une tige de sortie (38) liée au réflecteur (18), le correcteur (30) possédant une partie (31) qui ferme à étanchéité une unique ouverture (11) d'une paroi (13) du boîtier (12) **caractérisé en ce que** ladite partie (31) est une partie d'extrémité du correcteur (30) opposée à la tige de sortie (38), **en ce que** le correcteur (30) s'étend entre ladite partie d'extrémité (31) et la tige de sortie (38), de sorte que le correcteur (30) se trouve essentiellement situé dans le boîtier (12), **et en ce que** ladite partie d'extrémité (31) du correcteur (30) présente une paroi extérieure (37) comportant avantageusement une partie saillante (36) de forme complémentaire à un outil de préhension.

2. Projecteur (10) selon la revendication 1, **caractérisé en ce que** le correcteur (30) est alimenté électriquement par un faisceau de câbles (32) intérieur au boîtier (12).

3. Projecteur (10) selon la revendication 2, **caractérisé en ce que** le faisceau de câbles (32) et des câbles (22) d'alimentation de la lampe (20) sont réunis en un faisceau unique (42).

4. Projecteur (10) selon la revendication 3, **caractérisé en ce que** ledit faisceau unique (42) traverse le boîtier (12) au moyen d'un connecteur étanche unique qui réalise la connexion de la lampe (20) et du
correcteur (30) à l'alimentation du véhicule.

5. Projecteur (10) selon la revendication 1 à 4, **caractérisé en ce que** ladite partie d'extrémité (31) présente une collerette (34) située à l'extérieur du boîtier (12).

6. Projecteur (10) selon la revendication 5, **caractérisé en ce qu'**un joint (40) est monté comprimé entre la collerette (34) et la paroi (13) du boîtier (12).

7. Projecteur (10) selon la revendication 5 ou 6, **caractérisé en ce que** ladite partie d'extrémité (31) comporte une partie saillante (36) de forme complémentaire à un outil de préhension.

8. Projecteur (10) selon l'une des revendications 5 à 7, **caractérisé en ce que** le correcteur (30) présente des pions saillants (35) qui réalisent une fixation du correcteur (30) du type baïonnette.

9. Correcteur (30) pour projecteur (10) à boîtier (12), notamment pour véhicule automobile, comportant un mécanisme motoréducteur et présentant une tige de sortie (38), **caractérisé en ce qu'**il possède une partie d'extrémité (31) opposée à la tige de sortie (38), la partie d'extrémité (31) comportant des moyens (34,35) pour sa fixation étanche dans une ouverture (11) d'une paroi (13) du boîtier (12).

10. Correcteur (30) selon la revendication 9, **caractérisé en ce que** ladite partie d'extrémité (31) comporte une collerette (34).

## Claims

1. Headlight (10) for a motor vehicle, which comprises a casing (12) closed by a glass (14), a reflector (18) carrying a lamp (20) and received in the casing (12), and a corrector (30) having an output rod (38) connected to the reflector (18), the corrector (30) having a part (31) which sealingly closes off a single opening (11) in a wall (13) of the casing (12), **characterised in that** the said part (31) is an end part of the corrector (30) opposite to the output rod (38), **in that** the corrector (30) extends between the said end part (31) and the output rod (38) so that the corrector (30) is essentially situated in the casing (12), and **in that** the said end part (31) of the corrector (30) has an external wall (37) advantageously comprising a projecting part (36) with a shape complementary to a gripping tool.

2. Headlight (10) according to Claim 1, **characterised in that** the corrector (30) is supplied electrically by a cluster of cables (32) internal to the casing (12).

3. Headlight (10) according to Claim 2, **characterised in that** the cluster of cables (32) and cables (22) supplying the lamp (20) are combined in a single cluster (42).

4. Headlight (10) according to Claim 3, **characterised in that** the said single cluster (42) passes through the casing (12) by means of a single sealed connecter which makes the connection of the lamp (20) and the corrector (30) to the vehicle power supply.

5. Headlight (10) according to Claims 1 to 4, **characterised in that** the said end part (31) has a collar (34) situated on the outside of the casing (12).

6. Headlight (10) according to Claim 5, **characterised in that** a joint (40) is mounted compressed between the collar (34) and the wall (13) of the casing (12).

7. Headlight (10) according to-Claim 5 or 6, **characterised in that** the said end part (31) comprises a projecting part (36) with a shape complementary to a gripping tool.

8. Headlight (10) according to one of Claims 5 to 7, **characterised in that** the corrector (30) has projecting studs (35) which implement a fixing of the corrector (30) of the bayonet type.

9. Corrector (30) for a headlight (10) with a casing (12), in particular for a motor vehicle, comprising a motor and gearbox mechanism and having an output rod (38), **characterised in that** it has an end part (31) opposite to the output rod (38), the end part (31) comprising means (34, 35) for its sealed fixing in an opening (11) in a wall (13) of the casing (12).

10. Corrector (30) according to Claim 9, **characterised in that** the said end part (31) comprises a collar (34).

## Patentansprüche

1. Scheinwerfer (10) für Kraftfahrzeuge, der ein durch eine Scheibe (14) geschlossenes Gehäuse (12), einen Reflektor (18), der eine Lampe (20) trägt und in dem Gehäuse (12) aufgenommen ist, sowie einen Steller (30) umfasst, der eine mit dem Reflektor (18) verbundene Abtriebsstange (38) aufweist, wobei der Steller (30) ein Teil (31) besitzt, das eine einzige Öffnung (11) in einer Wand (13) des Gehäuses (12) dicht abschließt,
**dadurch gekennzeichnet, dass** das Teil (31) ein der Abtriebsstange (38) gegenüberliegendes Endteil des Stellers (30) ist, dass sich der Steller (30) zwischen dem Endteil (31) und der Abtriebsstange (38) derart erstreckt, dass der Steller (30) im Wesentlichen im Gehäuse (12) angeordnet ist, und dass das Endteil (31) des Stellers (30) eine Außenwand (37) aufweist, die vorteilhafterweise ein vorstehendes Teil (36) umfasst, dessen Form komplementär zu einem Greifwerkzeug ist.

2. Scheinwerfer (10) nach Anspruch 1,
**dadurch gekennzeichnet, dass** der Steiler (30) durch einen Kabelbaum (32) innen im Gehäuse (12) elektrisch versorgt wird.

3. Scheinwerfer (10) nach Anspruch 2,
**dadurch gekennzeichnet, dass** der Kabelbaum (32) und Kabel (22) zur Speisung der Lampe (20) zu einem einzigen Kabelbaum (42) zusammengefasst sind.

4. Scheinwerfer (10) nach Anspruch 3,
**dadurch gekennzeichnet, dass** der einzige Kabelbaum (42) das Gehäuse (12) mittels eines einzigen dichten Steckverbinders durchquert, der die Verbindung der Lampe (20) und des Stellers (30) mit der Stromversorgung des Fahrzeugs herstellt.

5. Scheinwerfer (10) nach Anspruch 1 bis 4,
**dadurch gekennzeichnet, dass** das Endteil (31) einen außerhalb des Gehäuses (12) angeordneten Kragen (34) aufweist.

6. Scheinwerfer (10) nach Anspruch 5,
**dadurch gekennzeichnet, dass** eine Dichtung (40) zwischen dem Kragen (34) und der Wand (13) des Gehäuses (12) komprimiert angebracht ist.

7. Scheinwerfer (10) nach Anspruch 5 oder 6,
**dadurch gekennzeichnet, dass** das Endteil (31) ein vorstehendes Teil (36) umfasst, dessen Form komplementär zu einem Greifwerkzeug ist.

8. Scheinwerfer (10) nach einem der Ansprüche 5 bis 7,
**dadurch gekennzeichnet, dass** der Steller (30) vorstehende Stifte (35) aufweist, die den Steller (30) nach Art einer Bajonettbefestigung befestigen.

9. Steller (30) für Scheinwerfer (10) mit Gehäuse (12), insbesondere für Kraftfahrzeuge, der. einen Getriebemotormechanismus umfasst und eine Abtriebsstange (38) aufweist,
**dadurch gekennzeichnet, dass** er ein der Abtriebsstange (38) gegenüberliegendes Endteil (31) besitzt, wobei das Endteil (31) Mittel (34, 35) zu seiner dichten Befestigung in einer Öffnung (11) einer Wand (13) des Gehäuses (12) umfasst.

10. Steller (30) nach Anspruch 9,
**dadurch gekennzeichnet, dass** das Endteil (31) einen Kragen (34) aufweist.
